# EUROPEAN PATENT SPECIFICATION

(11) **EP 3 796 413 B1**
(45) Date of publication and mention of the grant of the patent: **10.01.2024**
(21) Application number: 19382812.6
(22) Date of filing: 20.09.2019
(51) Int. Cl.: H01M 50/20, H01M 10/613, H01M 10/625, H01M 10/653, H01M 10/6556, B60L 50/60

(54) **BATTERY ARRANGEMENT FOR INTEGRATION IN A VEHICLE**
BATTERIEANORDNUNG ZUR INTEGRATION IN EINEM FAHRZEUG
AGENCEMENT DE BATTERIE POUR UNE INTÉGRATION DANS UN VÉHICULE

(43) Date of publication of application: 24.03.2021
(73) Proprietor: Airbus S.A.S., 31700 Blagnac (FR); Airbus Operations S.L., 28906 Getafe (Madrid) (ES)
(72) Inventor: ZIMMERMANN, Kristian, 28024 Taufkirchen (DE); ROBLEDO, Jesús, 28906 Getafe - Madrid (ES)
(74) Representative: Ponti & Partners, S.L.P

(56) References cited:
- EP-A1- 3 336 957
- EP-A1- 3 525 257
- DE-A1-102012 012 897
- DE-A1-102017 106 068
- DE-B4-102015 214 185
- US-A1- 2013 143 079
- US-A1- 2013 183 566
- US-A1- 2014 011 059
- US-A1- 2017 054 307
- US-A1- 2019 157 891

## Description

The present invention pertains to a battery arrangement for integration in a vehicle, especially an aircraft or spacecraft.

### Background of the invention

Although it can be used in many applications, the present invention and the problems underlying it are explained in greater detail in relation to passenger aircraft. However, the methods and devices described can likewise be used in different vehicles and in all sectors of the transport industry, e.g. for road vehicles, for rail vehicles, for general aircraft or for watercraft.

Lithium ion accumulators can be found as rechargeable energy storage devices in many different areas of engineering. In particular, they are used in the case of electrically powered mobility as energy storage devices for electric cars and hybrid vehicles. To this end, many manufacturers implement a large number of batteries or battery cells in the form of "battery packs" into a vehicle structure, e.g. a motor vehicle body; see, for example, documents US 8,833,499 B2 and DE 10 2015 214 185 B4. In a battery pack or battery set of this kind, several thousand individual cells can be interconnected, e.g. round lithium ion cells with a cylinder diameter of about 20 mm and a length of about 100 mm.

However, the generic integration concepts pursued in this context are not always suitable for satisfying the technical requirements and boundary conditions for aircraft from a structural point of view. Additional reinforcing measures, e.g. supplementary reinforcing structures, would directly increase the weight and thus ultimately fuel consumption.

In a typical application, it is unavoidable to provide monitoring and active temperature control of the batteries to enable such batteries to be operated as efficiently as possible. This is relevant not least in the aerospace sector owing to the greatly fluctuating operating and ambient temperatures as well as the demanding safety requirements. For suitable temperature control of the batteries of a battery pack, it is possible, for example, to use devices such as cooling plates or the like, in which a liquid and/or a gas is passed through fluid channels; see, for example, documents US 8,383,260 B2 and US 2017/0047624 A1. Cooling devices of this kind further increase the weight.

In many systems, the temperature of the batteries is monitored by a so-called Battery Management System (BMS). Typically, the number of sensitive channels and thus the number of cells whose temperature can be monitored with the BMS is limited. This becomes particularly relevant for large battery systems, where the amount of cells can exceed the amount of available channels/ sensor by far. Moreover, many standard BMS systems are limited in their information processing capabilities and are usually not optimally adapted to the characteristic behavior of the respective battery system and/or the individual battery cells.

Document US 2014/011059 A1 describes a power supply device and a vehicle equipped with such a device. The supply device includes a battery cell stack con-structed of a plurality of stacked, rectangular battery cells, and a cooling pipe dis-posed in a thermally coupled state over one surface of the battery cell stack, the cooling pipe being adapted to perform a heat exchange with the battery cell stack by allowing a refrigerant to flow inside the pipe, wherein a plurality of rows of the cooling pipes are spaced apart from each other over the one surface of the battery cell stack, and a resin member is placed between the spaced-apart cooling pipes such that the one surface of the battery cell stack is covered in a sealed state.

Document DE 10 2017 106068 A1 describes a battery system, in particular for an aircraft.

### Description of the invention

Against this background, it is an object of the present invention to find solutions for efficient, lightweight and safe integration of a large number of battery cells into a vehicle and for operating and monitoring these batteries effectively.

This object is achieved by a battery arrangement having the features of claim 1 and an aircraft or spacecraft having the features of claim 16.

According to an aspect of the invention, a battery arrangement for integration in a vehicle, in particular an aircraft or spacecraft, comprises two cover plates having battery sockets; a plurality of batteries, which are held on both sides between the cover plates by the battery sockets, wherein the batteries are arranged in battery rows along the cover plates; and a microchannel tube arrangement having a plurality of thermally conducting tubes configured to dissipate heat from the batteries, wherein a lateral surface of each battery is wrapped in a thermally conductive sheet, which is thermally connected to the microchannel tube arrangement. At least one sheet end of the thermally conductive sheet extends beyond the respective battery and is attached to the microchannel tube arrangement. The sheet end is adhesively fixed to the microchannel tube arrangement by a heat sensitive adhesive, which dissolves above a given temperature threshold such that the thermally conductive sheet is disconnected from the microchannel tube arrange-ment above the temperature threshold,

According to a further aspect of the invention, an aircraft or spacecraft comprises a battery arrangement according to the invention.

Thus, one idea of the present invention is to create an optimal heat path, which is largely decoupled from geometrical constraints and minimizes thermal gradients at minimal weight impact, by extracting generated heat from a battery and/or battery cell by wrapping it in a highly thermally conductive sheet material and coupling this sheet to thermally conducting tubes. The preferred area for cooling is the lateral surface area of the individual batteries/battery cells for two major reasons: it is the biggest area of a typical battery cell and it does not interfere with the electrical contacts of the cell. Thus, e.g. in case of cylindrical battery cells, the cylindrical surface area is used as contact area for the thermally conductive sheet. In order to reduce the temperature gradient inside the tubes, the length of the tubes may be limited and multiple tubes may be operated in parallel. The tubes may then be connected to a cooling system including one or several heat exchangers.

In comparison to the present system, conventional cooling systems for batteries are severely limited in their capability to transport heat. Any cooling system consists of a chain of thermal resistances. Every single link in that chain can lead to a blockage of heat if:
∘ thermal resistance is too high (e.g. bad surface contact, air gap, improper material choice, etc.),
∘ contact area is too small, or
∘ thermal saturation is achieved.

Compared to conventional systems, herein a thermal management system for a battery arrangement is provided that optimizes the heat path and minimizes thermal gradients without increasing the weight of the battery arrangement in a relevant way.

A battery in the sense according to the invention is a general rechargeable electric storage element. This can be a secondary cell, i.e. an individual storage element in the sense of a secondary element, an accumulator cell, a storage cell, a battery cell or the like. In principle, however, batteries according to the invention likewise include interconnected secondary cells and/or interconnected storage elements, i.e. a battery consisting of secondary cells. In particular, batteries in the sense according to the invention include accumulators, e.g. lithium ion accumulators. Batteries according to the invention may have a cylindrical shape. In principle, however, battery or cell variants with other geometries are likewise provided, e.g. prismatic battery cells, wherein the respective battery holders and/or battery sockets can be correspondingly designed to receive these cell types or battery types.

Advantageous embodiments and improvements of the present invention are found in the subordinate claims.

According to the invention, at least one sheet end of the thermally conductive sheet extends beyond the respective battery and is attached to the microchannel tube arrangement. For example, the thermally conductive sheet may be wrapped around the lateral surface of each battery such that two ends on opposite sides of the sheet extend beyond the battery and may thus be used to attach the sheet to one or several tubes of the microchannel tube arrangement.

According to the invention, the sheet end is adhesively fixed to the microchannel tube arrangement by a heat sensitive adhesive. The heat sensitive adhesive dissolves above a given temperature threshold such that the thermally conductive sheet is disconnected from the microchannel tube arrangement above the temperature threshold.

The invention thus provides automatic protection against overheating of individual batteries. As soon as a battery/battery cell gets too hot, the adhesive dissolves and the sheet detaches from the microchannel tube arrangement thereby decoupling this particular battery from the battery arrangement permanently. For example, the temperature threshold may be roughly 100 °C or a similarly suited temperature. A chain reaction can thus be prevented by which the malfunctioning cell would heat up the entire system.

According to an embodiment of the invention, the thermally conductive sheet may comprise graphite. Graphite, e.g. provided as a foil, is an excellent heat transfer material, which transports heat from the battery cells much more effectively than more conventional materials, as for example copper.

According to an embodiment of the invention, a plurality of the thermally conducting tubes may run along each battery row. The tubes may be formed, for example, from aluminum or any other suited metal or metal alloy. Alternatively, also the tubes may be formed from graphite. The tubes may contain a fluid, i.e. a gas or a liquid, that transports heat away from the batteries, e.g. via laminar flow. In one particular example, the tubes may be arranged in parallel along the battery rows. The tubes may not only run along a straight line but may also be bent into a curved or more complex shape.

According to an embodiment of the invention, the thermally conducting tubes may be filled with a fluid for dissipating heat by convection. Convection is the preferred heat transfer mechanism, however also other forms of heat transfer may be utilized, e.g. conduction.

According to an embodiment of the invention, the battery arrangement may further comprise a heat exchanger and a cooling manifold, which connects the thermally conducting tubes of the microchannel tube arrangement with the heat exchanger.

According to an example, the batteries in the battery rows may each be aligned at a slope angle relative to the cover plates in order to absorb and transmit loads acting on the battery arrangement. The slope angle in the battery rows may have positive and negative values. The magnitude of the slope angle may comprise values greater than 0° and less than 90°.

Hence, the battery arrangement, e.g. a battery module or a battery pack, may be designed as a load-bearing structural element, which not only bears its own inherent load but likewise absorbs and/or transmits extraneous loads, i.e. it may contribute to the formation or reinforcement of an overall structure of a vehicle. The battery arrangement can thus to a certain extent replace existing structures since loads can be passed through the battery arrangement. For this purpose, the battery arrangement is of sandwich-type construction, in which a multiplicity of batteries or battery cells is held between two cover plates. In this case, tensile, compressive and/or shear forces can be passed directly through the batteries or battery cells. In this way, additional structure-reinforcing components can be eliminated, which in turn optimizes the number of components and ultimately the weight. From another point of view, it is possible by these measures to improve the weight-dependent energy or power density of a battery arrangement or of a vehicle.

As will be immediately clear to a person skilled in the art, sandwich constructions can furthermore be combined with one another, e.g. by layering them one above the other to create complex structures with a plurality or multiplicity of sandwich layers.

In order to absorb shear forces from different directions, the batteries in this arrangement are aligned both with positive and negative slope angles relative to the cover plates. Specifically, slope angles comprise angles with magnitudes between 0° and 90°. For example, a battery with a slope angle of 0° is aligned parallel to the cover plates, while a battery at a slope angle of 90° is perpendicular to the cover plates. A negative slope angle means that batteries slope in the opposite direction to batteries with a positive slope angle of the same magnitude, relative to a fixed spatial direction (e.g. a direction along a battery row), wherein the magnitude of the slope angle in this case is greater than 0° and less than 90°. This means that at least a proportion of the batteries is aligned at a slope angle α = ±X where 0° < |X| < 90°.

However, this does not exclude the possibility that at least another proportion of the batteries has a slope angle of 90°, for example. For example, batteries in a first battery row are aligned at a slope angle of 45°. A parallel second battery row can then have batteries at a slope angle of -45°, for example, i.e. the batteries in the second battery row slope in the opposite direction to the batteries in the first battery row. In another example, batteries are aligned at a slope angle of 45° in a first battery row, at 90° in a second battery row and at - 45° in a third battery row.

Fundamentally, however, the example likewise includes variants in which the slope angles of the batteries also vary within the battery rows, e.g. have different positive and/or negative values, in order to achieve optimum load distribution across the batteries or the battery arrangement. The batteries can thus be arranged along the load paths, for example, making it possible, in particular, to cover all load directions. In other words, the batteries or battery cells may be arranged and aligned in such a way that the structure of the battery arrangement is reinforced or stiffened and primary loads can be absorbed in an optimum manner by the battery arrangement.

In another example, the slope angle in successive battery rows can alternately have positive and negative values. For example, a multiplicity of battery rows can be provided, which can be arranged substantially parallel to one another, wherein all the batteries or battery cells in each row can be aligned alternately with a positive slope angle and a negative slope angle, respectively. The resulting battery arrangement is thus not only stable in relation to compressive loads but is likewise stable in relation to shear loads in different directions. Fundamentally, however, the batteries or battery rows may have positive and negative values in an alternating and varying manner, i.e. the batteries can have different positive and/or negative slope angles, inter alia even within the battery rows.

In another example, all the batteries of the battery arrangement can be aligned at a slope angle with a fixed magnitude, e.g. 30°, 45°, 60° or 70° etc. In principle, however, the batteries of a battery arrangement can likewise have different positive and/or negative values for the slope angle. It is furthermore envisaged, for example, that the batteries can also have different slope angles within a single battery row. Depending on the application, a person skilled in the art will choose advantageous alignments of the batteries or battery rows to optimize the properties of the battery arrangement under the action of loads.

In another example, the batteries in each battery row can have an identical slope angle. For example, all the batteries of a battery row can have a slope angle of ±30°, ±45°, ±60°, ±70° or ±80°.

In another example, the magnitude of the slope angle can be 45°. For example, alternating battery rows can be provided, wherein all the batteries in a row can have a slope angle of either 45° or -45°.

In another example, a proportion of the batteries can be arranged in intermediate battery rows. The intermediate battery rows can be situated between the battery rows. In the intermediate battery rows, the batteries can be aligned at a slope angle of 90° relative to the cover plates. For example, a repeating arrangement of three battery rows can be chosen, wherein all the batteries have a slope angle of 45° in a first battery row, a slope angle of 90° in a second battery row and a slope angle of -45° in a third battery row.

According to an example, the battery arrangement can furthermore have shear walls. The shear walls can connect the cover plates to each other. Two battery rows and/or intermediate battery rows in each case can be separated by one shear wall. In this case, the shear walls can serve different purposes. On the one hand, the shear walls reinforce the overall structure of the battery arrangement. On the other hand, the shear walls can serve additional functional purposes. In one specific example, the shear walls or a proportion of the shear walls can be designed as protective walls or safety walls, e.g. as fire protection walls or walls for avoiding or restricting thermal penetration. In one example, the shear walls can be used to enclose any gases or liquids which may form in a damage event. As an alternative or in addition, shear walls can serve as cooling means or thermal distributors by providing them, for example, with a material having a suitable thermal conductivity or manufacturing from a material of this kind, e.g. a metal material and/or a phase change material or the like.

According to an example, the batteries can be of cylindrical design. The battery sockets can be designed to receive cylindrical batteries. In this way, known and possibly standardized lithium ion accumulators can be provided, for example. As an alternative or in addition, the batteries can be of prismatic design. The battery sockets and/or holders can be correspondingly designed to receive prismatic batteries.

According to an example, at least one of the cover plates may comprise a plurality of venting channels in fluid communication with the batteries and may be configured to transport heat and/or gases away from the batteries. The venting channels can for example serve as a discharge channel in order to discharge any gases or liquids formed in the event of a damage. A correspondingly advantageous choice of dimensioning can be made for the venting channels, e.g. to enable a desired volume flow of a fluid, e.g. a gas or a liquid. The venting channels can be used to enable the prevention of thermal runaway propagation. Thus inherent safety of the battery arrangement as well as power and energy density are increased.

By arranging the batteries, e.g. cylindrical cells, in an angled configuration to accommodate mechanical stresses, e.g. under an angle of 45°, triangular venting channels may be created that allow for the passage of hot gases. Thus, be design only a limited number of cells are connected to each venting channel, thereby isolating the majority of the cells from one or several failing cells. Inside the venting channel, additional countermeasures may prevent hot gases to affect the neighbouring cells, e.g. closing vents, flame arrest, heat resistant and flame retardant materials etc. The cover plates may close off the venting channel and serve as fire wall against any neighbouring structure. Ideally, such a fire wall may be made from flame/ heat resistant material. Gases which are transported by the venting channels may be collected in a manifold and channelled away from critical structures via the manifold.

According to an example, at least one of the cover plates can be designed as a cooling plate. One or both of the cover plates can be formed from a metal material of high thermal conductivity, for example. According to a development, at least one of the cover plates can be designed as a heat exchanger with a multiplicity of cooling fins in order to dissipate heat generated by the batteries towards the outside. As an alternative or in addition, one or both cover plates can comprise a phase change material.

The cover plates can be manufactured integrally from a metal material having a multiplicity of fluid channels, for example. The cover plates can be manufactured from a metal, a metal alloy, a metallic material and/or a combination of these materials, for example. In one specific example, the cover plate are manufactured from aluminium, an aluminium alloy and/or a composite material containing aluminium. For the purpose of reducing weight, the cover plates can, on the other hand, contain or be manufactured from a plastic or some other lightweight material, e.g. a thermoplastic or a fibre-reinforced plastic, such as a carbon fibre-reinforced plastic (CFRP) and/or glass fiber-reinforced plastic (GFRP). To manufacture the cover plates, it is possible, for example, to use an additive method, in which said plates are manufactured completely in an integral manner without the need for special expenditure, additional assembly steps or even manual work. Fundamentally, the cover plates can be manufactured from all materials or material combinations for which additive methods are known.

According to an example, the battery arrangement may further comprise at least one printed circuit board arranged on one of the cover plates. The batteries of at least one battery row may be jointly coupled to the printed circuit board. The battery arrangement may further comprise at least one control unit configured to monitor and control the batteries of the respective printed circuit board (PCB).

The printed circuit board may be provided as flexible boards that are attached to the cover plates. However, the printed circuit board may also be directly printed onto the cover plates and/or manufactured together with the cover plates, e.g. in an additive manufacturing process.

According to an example, the printed circuit board may comprise a temperature sensor for each coupled battery. The control unit may be configured to monitor the batteries via the temperature sensors and to control the batteries based on control data derived from temperature data acquired with the temperature sensors.

For example, a low cost processing unit (e.g. a microcontroller) may be provided as control unit. As temperature sensor, a thermistor or other suitable sensor device may be useful. In addition, depending on the number of inputs available and integrated capabilities, further components as multiplexers or bus communication elements can be used.

In this example, an integrated sensor network is thus provided, wherein each cell is monitored through a respective temperature sensor, e.g. small thermal sensors like SMD thermistors or the like. The temperature sensors may be wired through integrated tracks inside the batteries, e.g. a flexible PCB, 3D printed electronics or the like. This monitoring can be extended to other elements of the batteries (e.g. cooling conductions) to higher monitoring level. Corresponding processing hardware may be provided for converting voltage signals from the integrated sensor network into data to be used for a processing software.

Modern battery systems consist of a large number of individual cells and are conceived as separate systems with minimal integration. In particular in case of the Lithium ion technology, each cell should be kept in narrow window of temperature and voltage operation to avoid damage to the cells or problematic situations (e.g. thermal runaway) as well as to maximize life span. In conventional systems however, temperature is monitored through the Battery Management System (BMS) and the number of cells which temperature can be measured is limited by the number of used BMS chips channels. This becomes particularly problematic for large battery systems, where the amount of cells exceeds the amount of available channels/ sensor by far. This potentially may lead to situations where problematic local situations cannot be detected in sufficient time. Moreover, battery operation is limited by the available information. Additionally, non-homogeneous temperature distributions due to a defective thermal management system may be left unnoticed, which in turn may affect the battery life (as well as replacement costs). Conventional BMS systems are severely limited in their information processing capabilities and are usually unaware of the characteristic behavior of the battery system and/or the individual battery cells.

The present system however is able to monitor each individual cell independently of the number of cells and independently of the specifically employed BMS. For example, the temperature may be measured and recorded continuously with a certain sampling rate. The presented system offers an alternative monitoring system, which may operate independently of the BMS, but may nevertheless interface with it. The system may be highly integrated in the battery arrangement and provide access to each cell and perform local processing of the information, e.g.:
∘ computing the state of health (SoH), state of charge (SoC) for every single cell in a large system of cells, or
∘ identifying anomalies by predefined pattern recognition.

The advantage of this approach is that this extra information amongst others allows for:
∘ much safer operation of the batteries due to constant temperature monitoring to ensure operation within the defined safe operation window and due to the fact that the system will allow accurate judging of the state of health and thus the performance,
∘ accurate estimation of performance capabilities, and
∘ better operational planning to reduce overall cost (as ageing of the elements could be improved and battery life extended).

According to an example, the control unit may be configured to feed the temperature data to a neural network representing the behavior of the batteries. However, also other known machine learning approaches could be utilized to identify predefined patterns (derived by testing/characterization) in the data distribution (e.g. potential thermal runaway event, unusual thermal distribution, premature ageing of the cells, and so on).

According to an example, the control unit may be configured to access a battery condition of the batteries and to control the batteries based on a comparison of the accessed battery condition with a predefined fault pattern and/or temperature pattern. For example, a fault pattern may comprise the malfunctioning of a single or several batteries in a certain way, e.g. due to overheating. However, also whole battery rows or even larger sectors of batteries may be considered collectively in order to define an expected pattern of behavior. Any deviation of such a predefined behavior may lead to a respective counter measure of the control unit.

According to an example, the battery arrangement may further comprise a battery management system and a bus communicatively coupling the at least one printed circuit board with the battery management system. The present system may thus be communicating with a more conventional BMS. For example, monitored data may be reported to the BMS.

According to an example, the battery arrangement may be designed as a load-bearing structural component for an aircraft or spacecraft. The battery arrangement can for example form a fuselage and/or aerofoil section of an aircraft or spacecraft, for example. In another example, the battery arrangement may be designed as a side wall, floor panel, ceiling panel, skin area, wing spar, wing rib and/or wing covering or the like. Furthermore, however, the battery arrangement can likewise be designed as a non-load-bearing secondary structure for an aircraft or spacecraft.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 shows a schematic side view of a battery arrangement according to an embodiment of the invention.
Fig. 2 shows a schematic sectional view of a structural component of an aircraft having battery arrangements according to Fig. 1.
Fig. 3 shows a schematic side view of an aircraft having the structural component from Fig. 2.
Fig. 4 shows another schematic side view of the battery arrangement from Fig. 1.
Fig. 5 shows a schematic top view of a battery from the battery arrangement of Fig. 4.
Fig. 6 shows another schematic top view of the battery from Fig. 5.
Fig. 7 shows the battery arrangement from Fig. 4 in a different side view.
Fig. 8 shows a schematic top view of the battery arrangement from Fig. 4.
Fig. 9 shows a detailed schematic sectional view of two batteries from the battery arrangement of Fig. 4.
Fig. 10 shows a schematic perspective (exploded) view of the battery arrangement from Fig. 4.
Fig. 11 shows a schematic perspective top view of a printed circuit board of the battery arrangement from Fig. 4.
Fig. 12 shows a schematic perspective bottom view of the printed circuit from Fig. 11.
Fig. 13 shows functional elements of the battery arrangement from Fig. 4.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

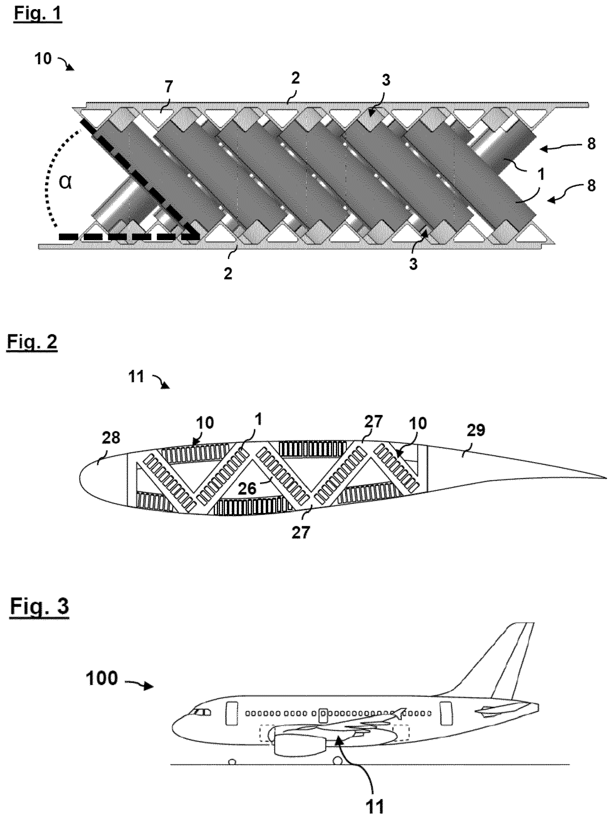

Figure 1 shows a schematic side view of a battery arrangement 10 according to an embodiment of the invention.

The battery arrangement 10 is used for the load-bearing structural integration of batteries 1 into a vehicle, e.g. into a structural component 11 of an aircraft 100 (e.g. a passenger aircraft), of the kind shown schematically in Figs. 2 and 3. The battery arrangement 10 here serves as a load-bearing structural component, i.e. the batteries 1 are integrated in this way into the primary and/or secondary structure of the vehicle. In other words, the batteries 1 form a load-bearing constituent of the structure of the vehicle. The battery arrangement 10 can form a battery module or a battery pack, for example, wherein the batteries 1 are battery cells in this case.

The battery arrangement 10 comprises two cover plates 2. Each cover plate 2 is formed with a multiplicity of battery sockets 3 for the accurately fitting, one-sided reception of a respective cylindrical battery 1, e.g. cylindrical lithium ion accumulators of the kind known in the automotive sector.

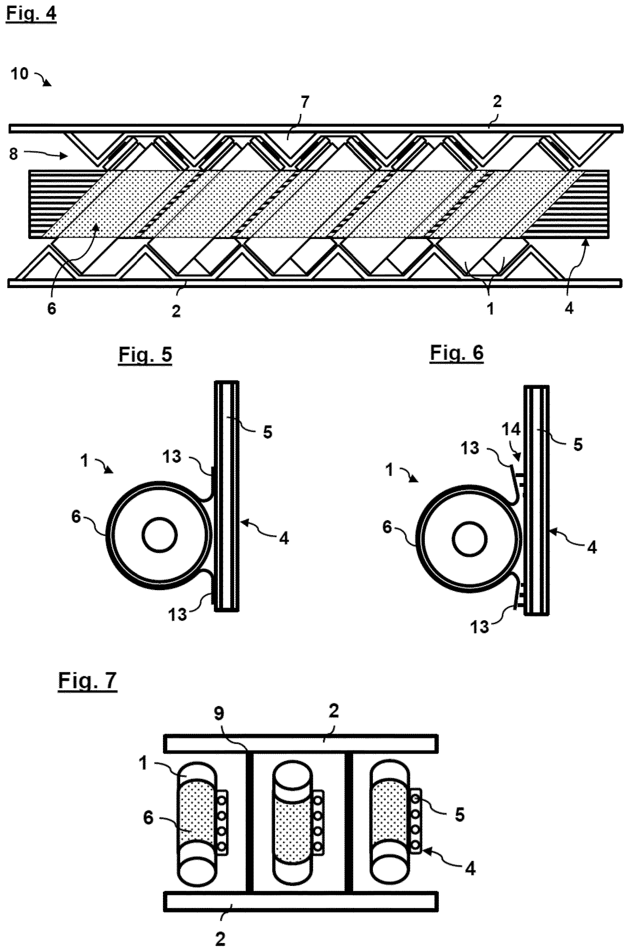

Furthermore, the battery arrangement 10 comprises a multiplicity of batteries 1 (or battery cells), which are held on both sides between the cover plates 2 by the battery sockets 3. Here, the batteries 1 are arranged in adjacent battery rows 8 along the cover plates 2, wherein the batteries 1 in the battery rows 8 are each aligned at a slope angle α relative to the cover plates 2 in order to absorb and transmit loads. In the specific example in Fig. 1, the slope angle α is ±45°, wherein the batteries 1 are in each case aligned at 45° in one battery row 8 and at -45° in the next battery row 8, in the opposite direction to the respectively adjacent battery rows 8 (in Fig. 1, only two battery rows 8 are shown for the sake of clarity, cf. also Figs. 4 and 7).

Fig. 1 illustrates schematically that the battery arrangement 10 fundamentally follows a sandwich construction, wherein the cover plates 2 enclose a (single-layer) core of batteries 1. Here, as with wall claddings or floor panels of sandwich construction, the battery arrangement 10 serves as a load-bearing structural component, which absorbs and/or transmits both inherent loads and introduced extraneous loads. The battery arrangement 10 can thus replace existing structures of a vehicle since loads can be passed through the battery arrangement 10 via the cover plates 2 and the batteries 1. In order to absorb shear forces from different directions, the batteries 1 in this arrangement are aligned both with positive and negative slope angles α relative to the cover plates 2. In this way, additional structure-reinforcing components can be eliminated, which in turn optimizes the number of components, the weight and ultimately fuel consumption, i.e. the weight-dependent energy or power density of the aircraft 100 is improved.

It is possible, for example, for the cover plates 2 to be manufactured from a plastic, such as a thermoplastic, a metal material, e.g. an aluminum alloy, or a fiber-reinforced composite material, e.g. CFRP. Depending on the embodiment, the cover plates 2 together with the battery sockets 3 can be of integral design. In principle, the cover plates 2 can furthermore each be designed as a cooling plate and/or can have a cooling function. For example, a multiplicity of fluid channels and/or venting channels 7 can be provided, which can each be manufactured integrally with the cover plate 2, e.g. from a metal material.

In the illustrative embodiment in Fig. 1, the channels are used as venting channels 7 and extend transversely to the alignment of the individual battery rows 8. In this illustrative embodiment, the venting channels 7 and the battery sockets 3 form a sawtooth profile which extends in the direction of the battery rows 8. The venting channels 7 are in fluid communication with the batteries 1 and are configured to transport heat and/or gases away from the batteries 1. However, building on the above teaching, it will become apparent to a person skilled in the art that alternative configurations of the cover plate 2 are possible, in which the fluid channels 7 take a different course and/or are supplemented or replaced by (alternative) cooling means, for example.

Fig. 3 shows an illustrative use of the battery arrangement 10 from Fig. 1 in an aircraft wing, wherein batteries 1 corresponding to Fig. 1 are installed both in the wing spars 26 and the wing coverings 15. In principle, the battery arrangement 10 shown in Fig. 1 can be configured in relatively thin sandwich layers (two covering layers with one battery layer in between). In this sense, the battery arrangements 10 thus form a load-bearing constituent of the aircraft wing and do not have to be integrated as separate components into the aircraft 100.

Fig. 4 shows another schematic side view of the battery arrangement 10 from Fig. 1 along one battery row 8. Figs. 5 and 6 show sectional top views of a single battery 1 from the battery arrangement 10 of Fig. 4. Fig. 7 shows the battery arrangement 10 transversely to the direction of the battery rows 8, which alternately have positive and negative slope angles α, e.g. ±45° as in Fig. 1.

As can be seen on these figures, the battery arrangement 10 further comprises a microchannel tube arrangement 4 for dissipating heat from the batteries 1, which comprises a plurality of thermally conducting tubes 5 running in parallel along the battery rows 8. The cylindrical lateral surface of each battery 1 is wrapped in a thermally conductive sheet 6 made from graphite, which is adhesively fixed to the thermally conductive tubes 5 of the microchannel tube arrangement 4 at two sheet ends 13 protruding from the lateral surface of the batteries 1. In order to facilitate heat transfer away from the batteries 1, the tubes 5 may be filled with a gas or a liquid, which may transfer the heat by convection. The tubes 5 themselves may also be formed from graphite. Alternatively, the tubes 5 may comprise a metal or another suitable material with high thermal conductivity.

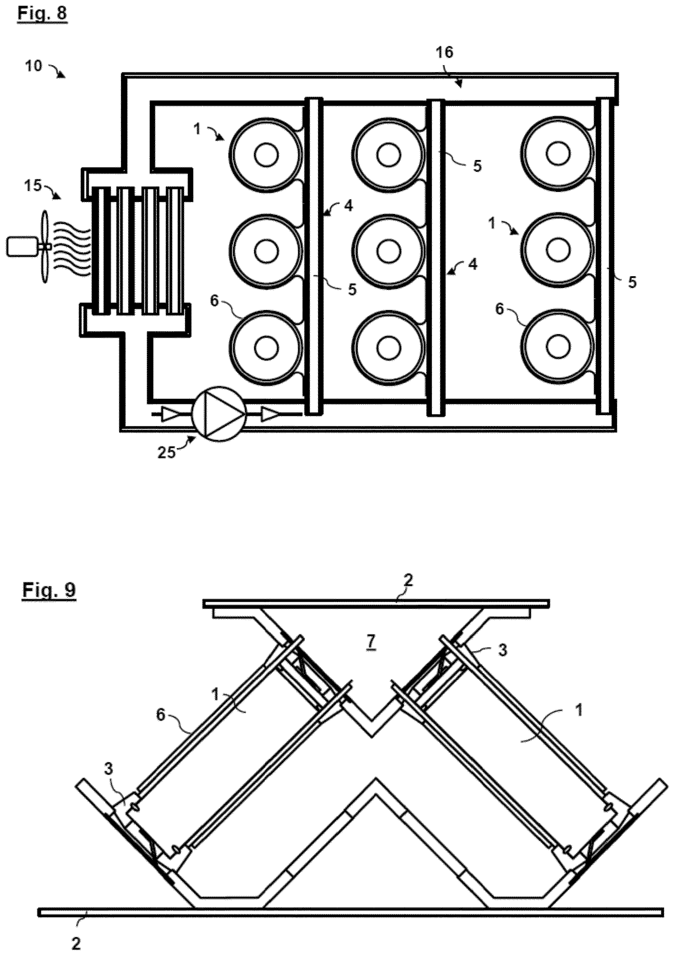

As can be further seen on Fig. 8, the microchannel tube arrangement 4 leads into a cooling manifold 16, which in turn is connected to a heat exchanger 15. A pump 25 may be provided in order to move a cooling liquid and/or gas through the battery arrangement 10 via the thermally conductive tubes 5.

The battery arrangement 10 thus provides a highly effective and yet weight efficient solution for thermal management. Thermal gradients can be minimized at low weight due to an optimal heat path that is largely decoupled from geometrical constraints. Moreover, the system may provide an automatic decoupling of overheating batteries 1 by using a heat sensitive adhesive 14 for attaching the thermally conductive sheets 6 of the batteries 1 to the microchannel tube arrangement 4. The heat sensitive adhesive 14 may be configured to dissolve and/or detach above a given temperature threshold such that the thermally conductive sheet 6 is disconnected from the microchannel tube arrangement 4 above the temperature threshold.

This is illustrated in Fig. 6, which shows the battery 1 of Fig. 5 after the temperature threshold has been crossed. For example, the battery 1 may have a fault or malfunction and may as a consequence suffer thermal runaway. As soon as the temperature however exceeds the temperature threshold, e.g. 100 °C or similar, the heat sensitive adhesive 14 dissolves and the battery 1 gets automatically disconnected from the cooling cycle. Thus, any propagation of the thermal runaway can be contained.

Other provisions may help to further improve safety of the battery arrangement 10. As one example, the embodiment of Fig. 7 comprises a multiplicity of shear walls 9, which connect the cover plates 2 to each other and each separate two battery rows 8 from each other. On the one hand, the shear walls 9 serve to reinforce the structure of the battery arrangement 10. On the other hand, the shear walls 9 can furthermore be designed as protective walls or the like, e.g. as fire protection walls. The shear walls 9 could separate the individual battery rows 8 fluid tightly from one another, for example, thus ensuring that gases and/or liquids escaping in a damage event cannot propagate in an uncontrolled manner.

Fig. 9 shows a detailed view of the embodiment of Fig. 4 with two batteries 1 between the cover plates 2. The figure illustrates that the venting channel 7, allowing for the passage of hot gases and heat, feature a triangular shape that naturally follows from the basic arrangement of the batteries 1 with an angle of ±45°. As only a limited number of batteries 1 (namely the ones adjacent to the respective venting channel 7) are connected to this particular venting channel 7, the other batteries 1 are isolated from the batteries connected to this venting channel 7 by design. Hence, in case of a thermal runaway of one of the batteries 1 of Fig. 9, the batteries 1 connected to the other venting channels 7 are not immediately affected.

The batteries 1 and the battery arrangement 10 may however comprise further means/countermeasures for improving safety of the system. For example, battery sockets 3 may be formed from a high temperature resistant thermoplastic and/or from ceramics and may be configured pressure tight and sealed to the surrounding structure, in particular the cover plates 2, such that gases may be guided in a controlled way. The cover plates 2 may be configured as fire walls, e.g. from continuous carbon fiber material. The battery sockets 3 may be formed on corrugated sheets of fiber reinforced material, e.g. glass fiber sheet molding composites, that in turn are attached to the cover plates 2. Additionally, the person of skill may provide additional safety means as diffusors, flame arrests, closing vents, heat shield material, flame guides and so on.

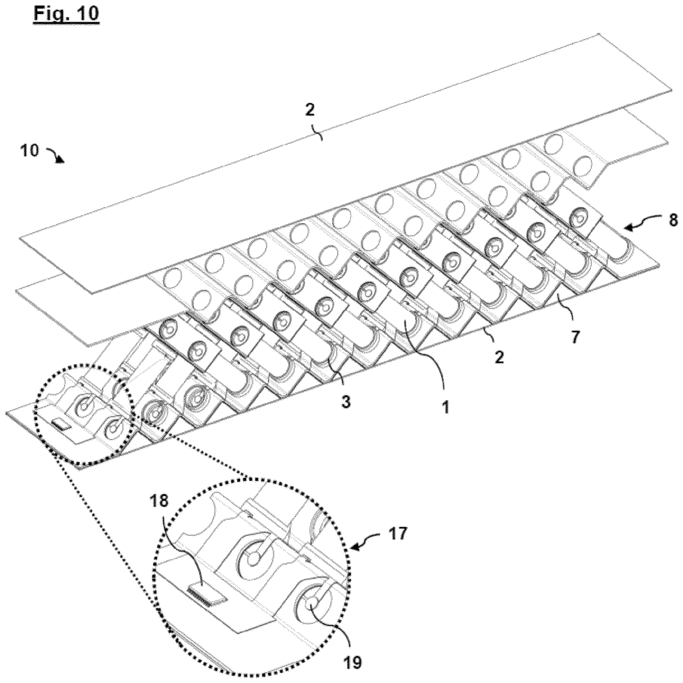

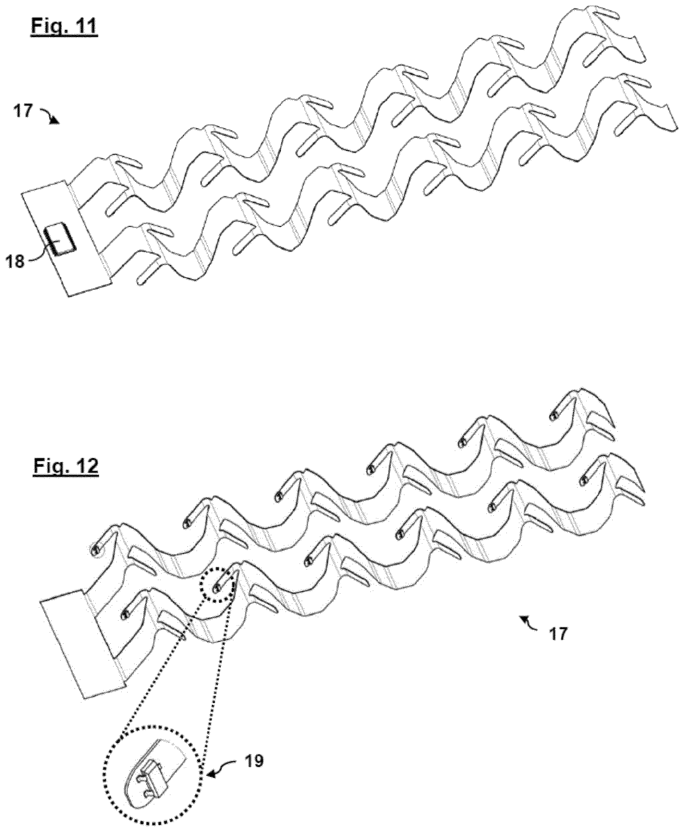

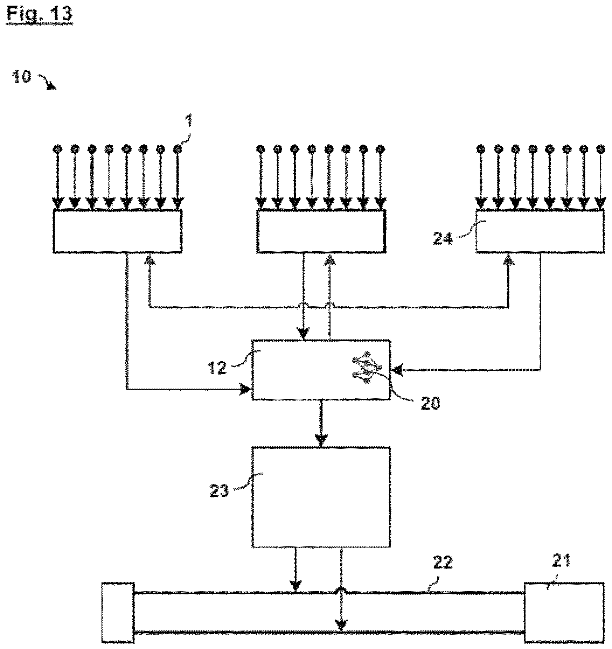

Electronic readout and monitoring of the battery arrangement 10 is now explained with reference to Figs. 10 to 13. As can be seen on these figures, the battery arrangement 10 further comprises printed circuit boards 17 arranged on one of the cover plates 2. The batteries 1 of several battery rows 8 are jointly coupled to one specific printed circuit board 17. The printed circuit board 17 comprises temperature sensors 19 for each coupled battery 1 configured to monitor the temperature of the corresponding battery 1 (cf. Fig. 12). The temperature data are collected and read out by an acquisition hardware 18 at one end of the printed circuit board 17 and then transferred to a control unit 12 (cf. Fig. 13).

The control unit 18 is configured to monitor the batteries 1 via the temperature sensors 19 and to control the batteries 1 based on control data derived from temperature data acquired with the temperature sensors 19. Specifically, the control unit 18 is configured to access a battery condition of the batteries 1 and to control the batteries 1 based on a comparison of the accessed battery condition with a predefined fault pattern and/or temperature pattern. To this end, the control unit 18 may employ advanced machine learning techniques. For example, the control unit 12 may feed the temperature data to a neural network 20 representing the behavior of the batteries 1. The control unit 12 itself may be communicatively coupled via a transceiver 23 (e.g. a CAN transceiver) and a data bus 22 to a battery management system 21 (cf. Fig. 13).

In one particular example, three rows of six batteries 1 (battery cells), i.e. overall 18 batteries, may be coupled to one printed circuit board 17 and may be controlled jointly by a corresponding control unit 12. The battery arrangement 10 however may overall comprise hundreds or thousands of batteries 1, which may be divided into such or similar groups, each such group having its individual control unit 12. The control units 12 of the battery groups may be connected in parallel to the bus 22 and thus to the battery management system 22.

The control system does comprises three main parts:
∘ an integrated sensor network for monitoring each individual cell,
∘ a processing hardware comprising a control unit, e.g. a microcontroller or the like, in communication with a battery management system, and
∘ a processing software, e.g. including machine learning functionality to identify predefined patterns.

In the foregoing detailed description, various features are grouped together in one or more examples or examples with the purpose of streamlining the disclosure. It is to be understood that the above description is intended to be illustrative, and not restrictive.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: battery/battery cell
- 2: cover plate
- 3: battery socket
- 4: microchannel tube arrangement
- 5: thermally conducting tube
- 6: thermally conductive sheet
- 7: venting channel
- 8: battery row
- 9: shear wall
- 10: battery arrangement
- 11: structural component
- 12: control unit
- 13: sheet end
- 14: heat sensitive adhesive
- 15: heat exchanger
- 16: cooling manifold
- 17: printed circuit board
- 18: acquisition hardware
- 19: temperature sensor
- 20: neural network
- 21: battery management system
- 22: bus
- 23: transceiver
- 24: multiplexer
- 25: pump
- 26: wing spar
- 27: wing covering
- 28: wing leading edge
- 29: wing trailing edge
- 100: aircraft
- α: slope angle

## Claims

1. Battery arrangement (10) for integration in a vehicle, in particular an aircraft or spacecraft (100), comprising:
two cover plates (2) having battery sockets (3);
a plurality of batteries (1), which are held on both sides between the cover plates (2) by the battery sockets (3), wherein the batteries (1) are arranged in battery rows (8) along the cover plates (2); and
a microchannel tube arrangement (4) having a plurality of thermally conducting tubes (5) configured to dissipate heat from the batteries (1), wherein a lateral surface of each battery (1) is wrapped in a thermally conductive sheet (6), which is thermally connected to the microchannel tube arrangement (4);
wherein at least one sheet end (13) of the thermally conductive sheet (6) extends beyond the respective battery (1) and is attached to the microchannel tube arrangement (4); and
wherein the sheet end (13) is adhesively fixed to the microchannel tube arrangement (4) by a heat sensitive adhesive (14), which dissolves above a given temperature threshold such that the thermally conductive sheet (6) is disconnected from the microchannel tube arrangement (4) above the temperature threshold.

2. Battery arrangement (10) according to claim 1, wherein the thermally conductive sheet (6) comprises graphite.

3. Battery arrangement (10) according to claim 1 or 2, wherein a plurality of the thermally conducting tubes (5) runs along each battery row (8).

4. Battery arrangement (10) according to one of the claims 1 to 5, wherein the thermally conducting tubes (5) are filled with a fluid for dissipating heat by convection.

5. Battery arrangement (10) according to one of the claims 1 to 6, further comprising:
a heat exchanger (15); and
a cooling manifold (16), which connects the thermally conducting tubes (5) of the microchannel tube arrangement (4) with the heat exchanger (15).

6. Battery arrangement (10) according to one of the claims 1 to 5, wherein at least one of the cover plates (2) comprises a plurality of venting channels (7) in fluid communication with the batteries (1) and configured to transport heat and/or gases away from the batteries (1).

7. Aircraft or spacecraft (100) having a battery arrangement (10) according to one of the claims 1 to 6.

## Patentansprüche

1. Batterieanordnung (10) zur Integration in ein Fahrzeug, insbesondere ein Luftfahrzeug oder Raumfahrzeug (100), umfassend:
zwei Abdeckplatten (2), die Batteriefassungen (3) aufweisen;
eine Mehrzahl von Batterien (1), die auf beiden Seiten zwischen den Abdeckplatten (2) durch die Batteriefassungen (3) gehalten werden, wobei die Batterien (1) in Batteriereihen (8) entlang der Abdeckplatten (2) angeordnet sind; und
eine Mikrokanalrohranordnung (4), die eine Mehrzahl von wärmeleitenden Rohren (5) aufweist, die dazu ausgelegt sind, Wärme von den Batterien (1) abzuführen, wobei eine Seitenfläche jeder Batterie (1) in eine wärmeleitende Folie (6) gewickelt ist, die thermisch mit der Mikrokanalrohranordnung (4) verbunden ist;
wobei sich mindestens ein Folienende (13) der wärmeleitenden Folie (6) über die jeweilige Batterie (1) hinaus erstreckt und an der Mikrokanalrohranordnung (4) angebracht ist; und
wobei das Folienende (13) durch einen wärmeempfindlichen Klebstoff (14) klebend an der Mikrokanalrohranordnung (4) befestigt ist, der sich oberhalb einer vorgebebenen Temperaturschwelle auflöst, so dass die wärmeleitende Folie (6) oberhalb der Temperaturschwelle von der Mikrokanalrohranordnung (4) gelöst wird.

2. Batterieanordnung (10) nach Anspruch 1, wobei die wärmeleitende Folie (6) Graphit umfasst.

3. Batterieanordnung (10) nach Anspruch 1 oder 2, wobei eine Mehrzahl der wärmeleitenden Rohre (5) entlang jeder Batteriereihe (8) verläuft.

4. Batterieanordnung (10) nach einem der Ansprüche 1 bis 5, wobei die wärmeleitenden Rohre (5) mit einem Fluid zum Abführen von Wärme durch Konvektion gefüllt sind.

5. Batterieanordnung (10) nach einem der Ansprüche 1 bis 6, ferner umfassend:
einen Wärmetauscher (15); und
einen Kühlverteiler (16), der die wärmeleitenden Rohre (5) der Mikrokanalrohranordnung (4) mit dem Wärmetauscher (15) verbindet.

6. Batterieanordnung (10) nach einem der Ansprüche 1 bis 5, wobei mindestens eine der Abdeckplatten (2) eine Mehrzahl von Belüftungskanälen (7) umfasst, die in Fluidverbindung mit den Batterien (1) stehen und dazu ausgelegt sind, Wärme und/oder Gase von den Batterien (1) weg zu transportieren.

7. Luftfahrzeug oder Raumfahrzeug (100), das eine Batterieanordnung (10) nach einem der Ansprüche 1 bis 6 aufweist.

## Revendications

1. Agencement de batterie (10) pour une intégration dans un véhicule, en particulier un aéronef ou un astronef (100), comprenant :
deux plaques de couverture (2) ayant des prises de batterie (3) ;
une pluralité de batteries (1), qui sont retenues sur les deux côtés entre les plaques de couverture (2) par les prises de batterie (3), dans lequel les batteries (1) sont disposées en rangées (8) le long des plaques de couverture (2) ; et
un agencement de tube à microcanaux (4) ayant une pluralité de tubes thermoconducteurs (5) conçus pour dissiper la chaleur des batteries (1), dans lequel une surface latérale de chaque batterie (1) est enroulée dans une feuille thermoconductrice (6), qui est en liaison thermique avec l'agencement de tube à microcanaux (4) ;
dans lequel au moins une extrémité de feuille (13) de la feuille thermoconductrice (6) s'étend au-delà de la batterie respective (1) et est fixée à l'agencement de tube à microcanaux (4) ; et
dans lequel l'extrémité de feuille (13) est fixée par adhésif à l'agencement de tube à microcanaux (4) par un adhésif thermosensible (14), qui se dissout au-dessus d'un seuil de température donné afin de détacher la feuille thermoconductrice (6) de l'agencement de tube à microcanaux (4) au-dessus du seuil de température.

2. Agencement de batterie (10) selon la revendication 1, dans lequel la feuille thermoconductrice (6) comprend du graphite.

3. Agencement de batterie (10) selon la revendication 1 ou 2, dans lequel une pluralité de tubes thermoconducteurs (5) s'étend le long de chaque rangée de batteries (8).

4. Agencement de batterie (10) selon l'une quelconque des revendications 1 à 5, dans lequel les tubes thermoconducteurs (5) sont remplis d'un fluide pour dissiper la chaleur par convection.

5. Agencement de batterie (10) selon l'une quelconque des revendications 1 à 6, comprenant en outre :
un échangeur de chaleur (15) ; et
un collecteur de refroidissement (16), qui raccorde les tubes thermoconducteurs (5) de l'agencement de tube à microcanaux (4) à l'échangeur de chaleur (15).

6. Agencement de batterie (10) selon l'une quelconque des revendications 1 à 5, dans lequel au moins l'une des plaques de couverture (2) comprend une pluralité de canaux d'aération (7) en communication fluidique avec les batteries (1) et conçus pour transporter la chaleur et/ou les gaz à distance des batteries (1).

7. Aéronef ou astronef (100) ayant un agencement de batterie (10) selon l'une quelconque des revendications 1 à 6.
